# EUROPÄISCHE PATENTANMELDUNG

(11) **EP 2 826 580 A1**
(43) Veröffentlichungstag der Anmeldung: **21.01.2015**
(21) Anmeldenummer: 13003585.0
(22) Anmeldetag: 17.07.2013
(51) Int. Cl.: B23B 49/00, B23B 51/00, B23B 31/11, B23B 31/00, B25B 27/18

(54) **Bohrstift mit stufenförmigem Bohrbereich**

(71) Anmelder: Werkzeug Pichler GmbH & Co. KG, 6020 Innsbruck (AT)
(72) Erfinder: Jenewein, Andreas, 6100 Seefeld (AT)
(74) Vertreter: Torggler, Paul Norbert

(57) **Zusammenfassung**

Axial längserstreckter Bohrstift (1) mit einem stufenförmig ausgebildeten Bohrbereich (D) und einem axial betrachtet hinter dem Bohrbereich (D) angeordneten Befestigungsbereich (B) zur Befestigung des Bohrstiftes (1) in einem Bohrhalter (2), wobei der Befestigungsbereich (B) ein Gewinde (3) oder eine im Querschnitt polygonale Umfangsausbildung (4) aufweist, wobei das Gewinde (3) oder die polygonale Umfangsausbildung (4) im montierten Zustand des Bohrstiftes (1) am Bohrhalter (2) zur Drehmomentübertragung mit einem am Bohrhalter (2) komplementär ausgebildeten Bereich (H) zusammenwirkt.

## Beschreibung

Die Erfindung betrifft einen axial längserstreckten Bohrstift mit einem stufenförmig ausgebildeten Bohrbereich und einem axial betrachtet hinter dem Bohrbereich angeordneten Befestigungsbereich zur Befestigung des Bohrstiftes in einem Bohrhalter. Zudem betrifft die Erfindung einen axial längs erstreckten Bohrhalter zum Halten eines Bohrstiftes, mit einem Haltebereich zum Halten eines Bohrstiftes. Weiters betrifft die Erfindung ein Set mit einem solchen Bohrstift und einem solchen Bohrhalter. Darüber hinaus betrifft die Erfindung die Verwendung eines solchen Bohrstiftes.

Bei Brennkraftmaschinen ist es oftmals erwünscht, die in einem Zylinderkopf der Brennkraftmaschine verschraubten Glühstifte zu tauschen. Aufgrund verschiedenster Ursachen kommt es aber oft dazu, dass sich diese Glühstifte nicht ohne weiteres aus dem Zylinderkopf entfernen lassen. Aus dem Stand der Technik sind nun verschiedenste Werkzeuge bekannt, um einzelne Schritte dieser Demontage durchzuführen. Ein Werkzeug, das dabei oftmals notwendig ist, ist ein Bohrstift mit einem stufenförmig ausgebildeten Bohrbereich. Dieser dient dazu, in den festsitzenden Glühstift bzw. in einen festsitzenden Rest eines abgebrochenen Glühstifts ein Bohrloch zu bohren, um anschließend über einen Gewindebohrer ein Innengewinde in die Innenoberfläche dieses Bohrlochs einzuschneiden. Danach kann an diesem Gewinde eine Demontagevorrichtung angesetzt werden, wodurch der Glühstift bzw. der Rest des Glühstifts aus dem Zylinderkopf herausgezogen werden kann.

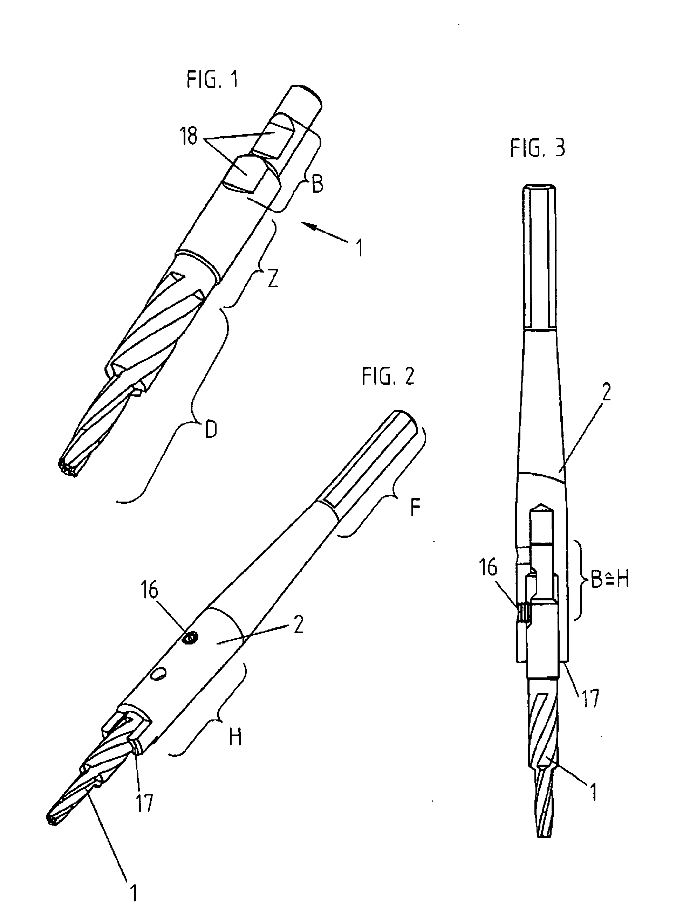

Ein konkretes Beispiel für einen solchen aus dem Stand der Technik bekannten Bohrstift 1 geht aus Fig. 1 hervor. Dabei ist im vorderen Bereich der stufenförmig ausgebildete Bohrbereich D und der daran anschließende zylinderförmige Bereich Z ersichtlich. Am axial vom Bohrbereich D abgewandten Ende sind die Befestigungsflächen 18 ausgebildet, die den Befestigungsbereich B bilden. Um diesen Bohrstift 1 mit einem nicht dargestellten Bohrgerät zu verbinden, ist in Fig. 2 zusätzlich ein Bohrhalter 2 dargestellt. Dieser Bohrhalter 2 weist einen Haltebereich H zum Halten des Bohrstiftes 1 und an seinem axial abgewandten Ende einen Fixierbereich F zum Verbinden mit einem Bohrgerät auf. Für die Fixierung des Bohrstiftes 1 am Bohrhalter 2 werden beim Stand der Technik Gewindestifte 16 (sogenannte Madenschrauben) verwendet, die über eine radiale Bohrung in den Bohrhalter 2 eingesetzt werden. Diese Gewindestifte 16 werden soweit eingedreht, bis sie den Bohrstift 1 über die Befestigungsflächen 18 am Bohrhalter 2 fixieren. Dies ist zusätzlich auch noch in der Schnittdarstellung gemäß Fig. 3 ersichtlich. Je nach gewünschter Bohrtiefe wurde beim Stand der Technik der Gewindestift 16 im vorderen oder hinteren Loch im Bohrhalter 2 eingesetzt, sodass der am Bohrhalter 2 ausgebildete Anschlag 17 für die Bohrtiefe jeweils an definierten unterschiedlichen Stellen relativ zum Bohrstift 1 liegt.

Nachteilig bei diesem Stand der Technik ist, dass die Wandung des Bohrhalter relativ dick sein muss, um genügend Platz für einen sicheren Halt für den Gewindestift bieten zu können. Zudem ist die Bohrtiefe aufgrund der beiden konkreten Befestigungsflächen bzw. der Gewindebohrungen im Halter begrenzt und somit nur beschränkt anwendbar. Weiters ist die Verbindung über die Gewindestifte relativ kompliziert und vor allem fragil.

Die Aufgabe der vorliegenden Erfindung besteht daher darin, einen gegenüber dem Stand der Technik verbesserten Bohrstift und einen verbesserten Bohrhalter zu schaffen. Vor allem sollen der Bohrstift und auch der Bohrhalter einfacher bzw. alternativ konstruiert werden können, stabiler sein und möglichst schmal ausgeführt werden.

Dies wird durch einen Bohrstift mit den Merkmalen von Anspruch 1 erreicht. Demnach ist vorgesehen, dass der Befestigungsbereich ein Gewinde oder eine im Querschnitt polygonale Umfangsausbildung aufweist, wobei das Gewinde oder die polygonale Umfangsausbildung im montierten Zustand des Bohrstiftes am Bohrhalter zur Drehmomentübertragung mit einem am Bohrhalter komplementär ausgebildeten Bereich zusammenwirkt. Somit ist nicht mehr eine indirekte Verbindung bzw. Fixierung des Bohrstiftes mit dem Bohrhatter über einen Gewindestift gegeben, sondern es gibt eine direkte Verbindung und Fixierung zwischen dem Bohrstift und dem Bohrhalter, die auch eine gute Drehmomentübertragung garantiert.

Um den Bohrstift wieder vom Bohrhalter zu lösen, ist bevorzugt zumindest eine zur Längserstreckung des Bohrstiftes parallele Flachstelle zum Ansetzen eines Werkzeugs und zum Lösen des Bohrstiftes vorgesehen. Je nach Größe und Ausbildung des Bohrstifts kann dabei die Flachstelle in einem zylinderförmigen Bereich des Bohrstiftes ausgebildet sein, wobei dieser zylinderförmige Bereich zwischen dem Befestigungsbereich und dem Bohrbereich liegt.

Schutz wird nicht nur begehrt für einen erfindungsgemäßen Bohrstift, sondern auch für einen komplementär ausgebildeten Bohrhalter. Demgemäß sieht ein solcher erfindungsgemäßer Bohrhalter vor, dass der Haltebereich ein Gewinde oder eine im Querschnitt polygonale Umfangsausbildung aufweist, wobei das Gewinde oder die polygonale Umfangsausbildung im montierten Zustand des Bohrstiftes am Bohrhalter zur Drehmomentübertragung mit einem am Bohrstift komplementär ausgebildeten Bereich zusammenwirkt.

Besonders bevorzugt ist dieser Haltebereich an einer Innenoberfläche einer Ausnehmung im Bohrhalter ausgebildet, wobei axial betrachtet vor dem Haltebereich ein Anschlag für einen am Bohrstift komplementär ausgebildeten Gegenanschlag ausgebildet ist. Dieser Anschlag und der Gegenanschlag bilden eine Zentrierung für den Bohrstift im Bohrhalter. Dabei können dieser Anschlag und dieser Gegenanschlag bevorzugt eine konusförmige Oberfläche aufweisen.

Zusätzlich zum Haltebereich kann ein solcher Bohrhafter einen axial betrachtet hinter dem Haltebereich angeordneten Fixierbereich zum Fixieren des Bohrhalters an einem Bohrgerät aufweisen. Weiters kann vorgesehen sein, dass der Bohrhalter zwischen dem Fixierbereich und dem Haltebereich einen zumindest abschnittsweise konusförmig ausgebildeten Bereich aufweist.

Schutz wird nicht nur für die einzelnen Komponenten (Bohrstift und Bohrhalter) begehrt, sondern auch für ein Set mit zumindest einem erfindungsgemäßen Bohrstift und einem erfindungsgemäßen Bohrhalter.

Weitere bevorzugte Ausführungsformen zu diesem Set sind im Nachfolgenden angegeben, wobei die jeweiligen Merkmale nicht nur das Set als Gesamtes betreffen, sondern auch als bevorzugte Ausführungsformen für die gesondert beanspruchten Bohrhalter bzw. Bohrstifte anzusehen sind. Wenn ein solches Merkmal somit in Bezug auf das Set genannt wird, soll dies nicht einschränkend verstanden werden.

Vor allem wenn der Haltebereich bzw. Befestigungsbereich eine im Querschnitt polygonale Umfangsausbildung aufweist, ist bevorzugt vorgesehen, dass der Befestigungsbereich und der Haltebereich jeweils zumindest eine zueinander komplementär ausgebildete Keilfläche aufweist. In radialer Richtung liegt über diese Keilflächen eine formschlüssige Verbindung zur Drehmomentübertragung vor. Über diese Keilflächen erfolgt in axialer Richtung eine kraftschlüssige Verbindung, die beim Bohren nicht aufgehoben wird. Nur bei einer gewünschten Demontage kann diese kraftschlüssige Verbindung über die Keilflächen durch Ziehen am Bohrstift gelöst werden. Besonders bevorzugt ist dabei vorgesehen, dass der Befestigungsbereich pyramidenstumpfförmig mit zumindest drei Pyramidenseitenflächen ausgebildet ist, wobei jede Pyramidenseitenfläche um einen Befestigungswinkel zur Achse des Bohrstiftes geneigt ist und eine Keilfläche bildet, und der Haltebereich komplementär pyramidenstumpfförmig mit zumindest drei Pyramidenseitengegenflächen ausgebildet ist, wobei jede Pyramidenseitengegenfläche um einen Haltewinkel zur Achse des Bohrhalters geneigt ist und eine Keilfläche bildet, wobei der Befestigungswinkel und der Haltewinkel gleich groß sind. Bevorzugt liegt der Haltewinkel und der Befestigungswinkel bei maximal 3 Grad. Dadurch hält der Bohrstift selbsthemmend am Bohrhalter.

Grundsätzlich kann die polygonale Umfangsausbildung unterschiedlichste polygonale Formen aufweisen. Bevorzugt basiert diese polygonale Umfangsausbildung auf einem regelmäßigen Polygon, besonders bevorzugt auf einem Quadrat. Die polygonale Umfangsausbildung kann auch in axialer Richtung variieren.

Wenn der Befestigungsbereich bzw. Haltebereich als Gewinde ausgebildet ist, ist bevorzugt vorgesehen, dass das Gewinde des Bohrstiftes als Außengewinde und das Gewinde des Bohrhalters als komplementäres Innengewinde ausgebildet ist.

Mit dem aus dem Stand der Technik bekannten Bohrset war es über die vorhandenen Befestigungsflächen nur möglich, im Wesentlichen zwei verschiedene Bohrtiefeneinstellungen vorzunehmen.

Demgegenüber umfasst das Set eine Bohrtiefeneinstellvorrichtung, mit der die Bohrtiefe des Bohrstiftes variabel einstellbar ist. Dadurch kann die Bohrtiefe kontinuierlich und exakt auf die jeweils gewünschte Tiefe eingestellt werden. Gemäß einem besonders bevorzugten Ausführungsbeispiel kann dabei vorgesehen sein, dass die Bohrtiefeneinstellvorrichtung ein, vorzugsweise hülsenförmiges, Anschlagelement zum Ansetzen an einem Zylinderkopf, wobei das Anschlagelement über eine Verbindungsvorrichtung, vorzugsweise ein Gewinde, mit dem Bohrhalter verbindbar ist, und ein mit dem Bohrhalter verbindbares Positionierelement, vorzugsweise eine Kontermutter, aufweist, wobei die Position des Anschlagelements relativ zum Bohrhalter durch das Positionierelement variabel festlegbar ist. Somit ist eine vom Bohrhalter separate und von den Befestigungsmitteln separate Bohrtiefeneinstellvorrichtung geschaffen, die einen wesentlich flexibleren Einsatz des gesamten Bohrsets ermöglicht.

Weiters kann ein Set auch einen Gewindebohrer (Innengewindeschneider) zum Schneiden eines Innengewindes in einen Glühstift umfassen. Zudem kann eine Demontagevorrichtung zum Demontieren eines Glühstifts aus einem Zylinderkopf einer Brennkraftmaschine vorgesehen sein. Je nach Kundenwunsch kann aber das gesamte Set auch ein Bohrgerät umfassen, wobei das Bohrgerät ein Gehäuse, eine Antriebsvorrichtung, vorzugsweise einen elektrischen Motor, und eine Fixiervorrichtung zum Fixieren des Bohrhalters aufweist, wobei durch die Antriebsvorrichtung die Fixiervorrichtung relativ zum Gehäuse drehbar ist.

Schutz wird auch begehrt für die Verwendung eines erfindungsgemäßen Bohrstiftes zum Bohren einer Ausnehmung, vorzugsweise einer Bohrung, in einen Glühstift, wenn der Glühstift in einem Zylinderkopf einer Brennkraftmaschine festsitzt. Zusätzlich wird dabei auch ein erfindungsgemäßer Bohrhalter eingesetzt.

Weitere Einzelheiten und Vorteile der vorliegenden Erfindung werden anhand der Figurenbeschreibung unter Bezugnahme auf die im Folgenden dargestellten Ausführungsbeispiele näher erläutert. Darin zeigen:
- Fig. 1 bis 3: den Stand der Technik,
- Fig.4: Zwei Darstellungen eines ersten Ausführungsbeispiels eines Bohrstiftes,
- Fig. 5 und 6: Darstellungen dieses Bohrstiftes mitsamt Bohrhalter,
- Fig.7: Darstellungen eines zweiten Ausführungsbeispieles des Bohrstiftes,
- Fig. 8 und 9: Darstellungen des zweiten Ausführungsbeispieles mit Bohrstift und Bohrhalter,
- Fig. 10: eine Explosionsdarstellung des Bohrstiftes mit Bohrhalter und Bohrtiefeneinstellvorrichtung,
- Fig. 11: zwei Darstellungen des zusammengebauten Sets gemäß Fig. 10,
- Fig. 12 und 13: die Bohrtiefeneinstellvorrichtung mit verschiedenen Bohrtiefen und
- Fig. 14: ein Demontageset mit diversen Utensilien.

Die Fig. 1 bis 3 wurden in der Beschreibungseinleitung bereits näher beschrieben.

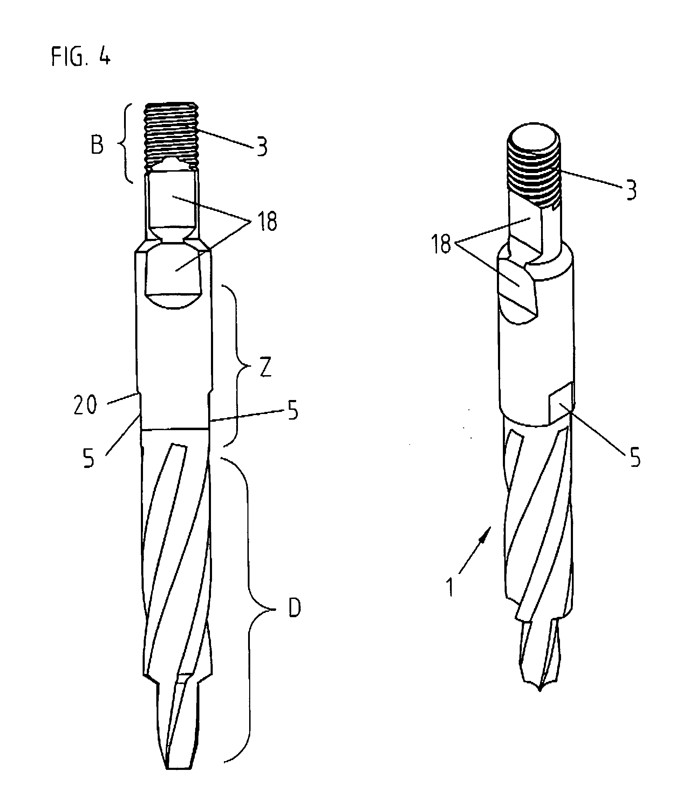

Fig. 4 zeigt ein erstes Ausführungsbeispiel eines Bohrstiftes 1, bei dem der Befestigungsbereich B ein Gewinde 3 (Außengewinde) aufweist. In axialer Richtung vor diesem Befestigungsbereich B ist ein zylinderförmiger Bereich Z angeordnet, wonach an vorderster Stelle ein stufenförmig ausgebildeter Bohrbereich D anschließt. Wie in Fig. 4 ersichtlich ist, weist auch dieser erfindungsgemäße Bohrstift 1 die aus dem Stand der Technik bekannten Befestigungsflächen 18 auf. Diese wären an sich nicht notwendig, dienen aber dazu, dass ein solcher Bohrstift 1 gegebenenfalls auch bei einem noch alten Bohrhalter 2 mit Gewindestiften 16 eingesetzt werden könnte. In dieser Fig. 4 sind auch die Flachstellen 5 ersichtlich, an denen ein Werkzeug zum Lösen des Bohrstiftes 1 aus dem Bohrhalter 2 angesetzt werden kann.

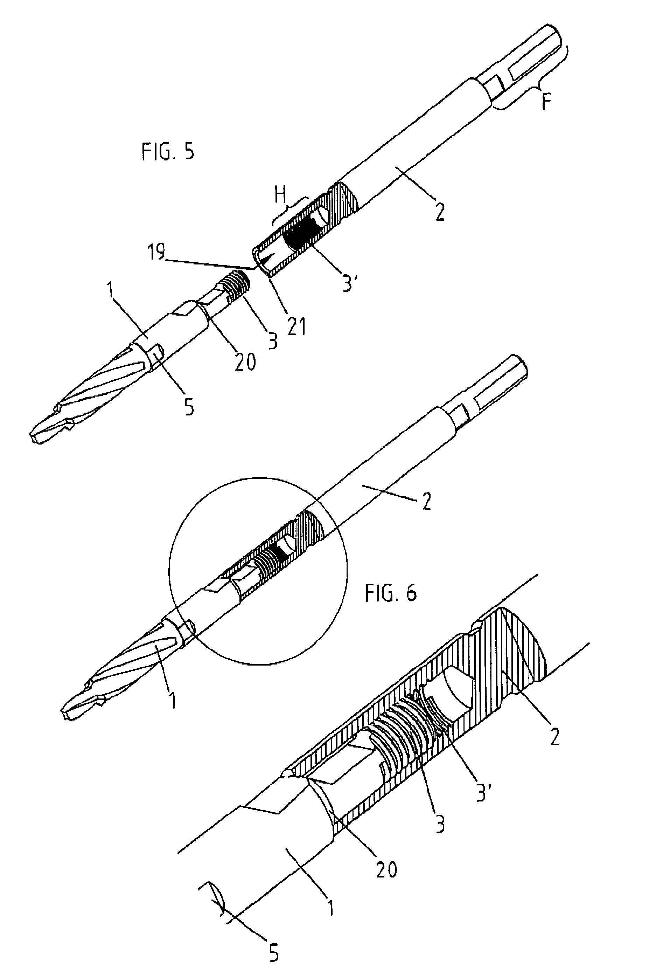

Fig. 5 zeigt zusätzlich zum Bohrstift 1 auch den Bohrhalter 2, wobei an einer Innenoberfläche einer Ausnehmung 19 im Bohrhalter 2 der Haltebereich H ausgebildet ist. Dieser Haltebereich H weist ein Gewinde 3' (Innengewinde) auf. Zusätzlich ist an der Stirnseite dieses Bohrhalters ein Gegenanschlag 21 ausgebildet, der komplementär zum am Bohrstift 1 vorhandenen Anschlag 20 ausgebildet ist. Diese beiden komplementär ausgebildeten Flächen (Anschlag 20 und Gegenanschlag 21) sind konusförmig ausgebildet und dienen der Zentrierung des Bohrstiftes 1 im Bohrhalter 2. Am vom Gegenanschlag 21 abgewandten Ende weist der Bohmalter 2 den Fixierbereich F zum Fixieren des Bohrhalters 2 an einem nicht dargestellten Bohrgerät auf. Dieses Bohrgerät kann an sich jede beliebige Bohrmaschine sein.

In Fig. 6 und in der Vergrößerung zu Fig. 6 sind der Bohrstift 1 und der Bohrhalter 2 über die beiden Gewinde 3 und 3' miteinander verbunden, wobei der Anschlag 20 am Gegenanschlag 21 anliegt.

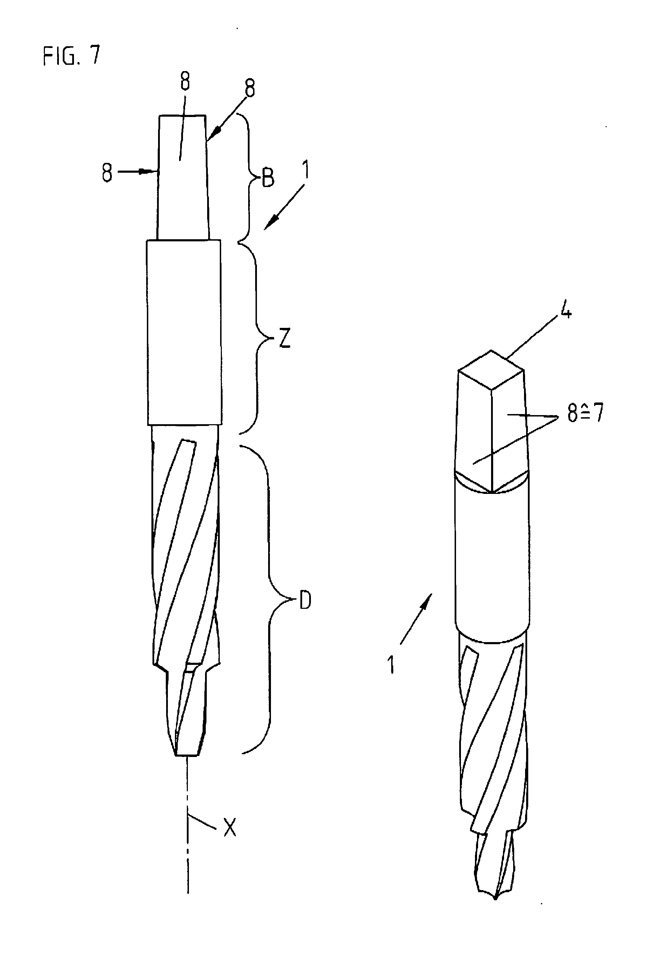

In Fig. 7 ist demgegenüber ein zweites Ausführungsbeispiel eines Bohrstiftes 1 dargestellt, bei dem der Befestigungsbereich B eine im Querschnitt polygonale Umfangsausbildung 4 aufweist. Im konkreten Fall ist diese Umfangsausbildung 4 quadratisch. Zudem ist vor allem aus der dreidimensionalen Darstellung der Fig. 7 ersichtlich, dass der Befestigungsbereich B pyramidenstumpfförmig ausgebildet ist. Dabei sind die einzelnen Pyramidenseitenflächen 8 leicht zur Achse X des Bohrstiftes 1 geneigt und bilden somit Keilflächen 7. Die Achse X des Bohrstifts 1 ist in diesen Darstellungen ident mit der Achse X des Bohrhalters 2.

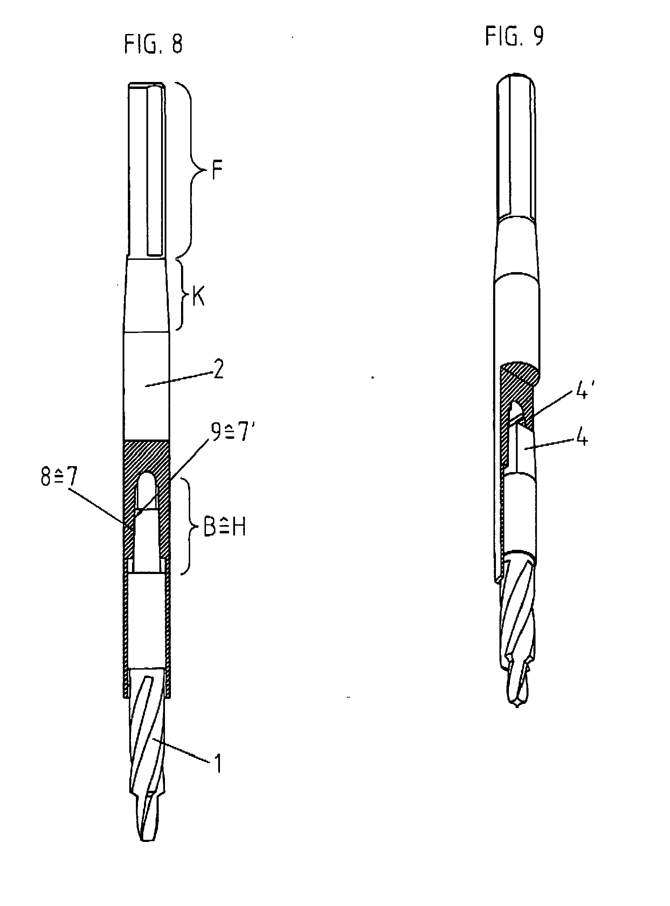

Dazu passend ist in den Fig. 8 und 9 ersichtlich, dass der Bohrhalter in dessen Haltebereich H eine komplementäre polygonale Umfangsausbildung 4' aufweist, wobei der Befestigungswinkel der Pyramidenseitenfläche 8 des Bohrstiftes 1 gleich groß ist wie der Haltewinkel der Pyramidenseitengegenfläche 9 des Bohrhalters 2. Die Pyramidenseitengegenfläche 9 bildet dabei eine Keilfläche 7', an der der Bohrstift 1 über die Pyramidenseitenfläche 8 (die ebenfalls eine Keilfläche 7 bildet) selbsthemmend hält.

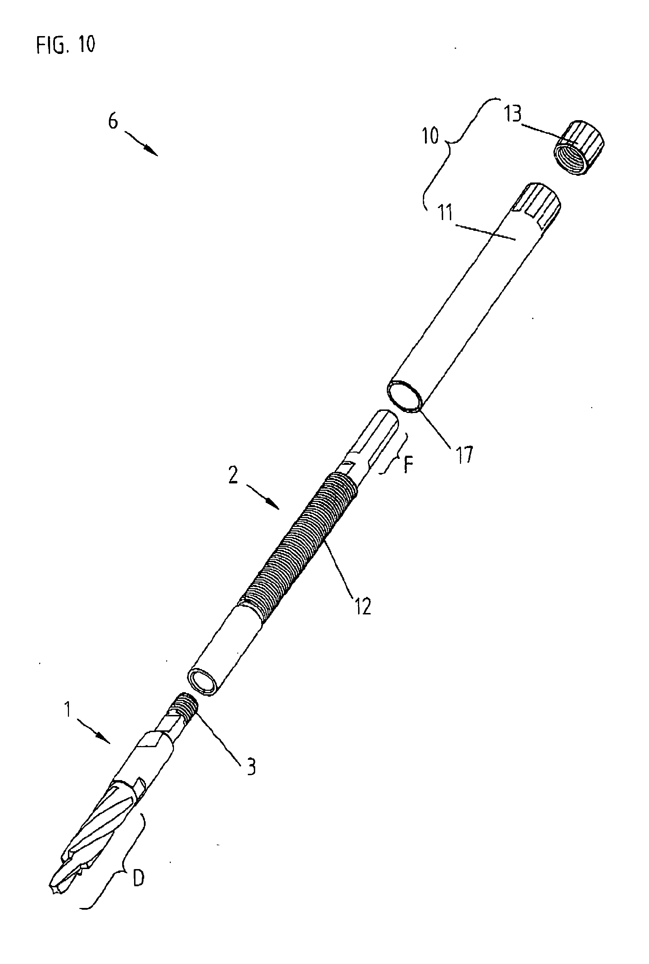

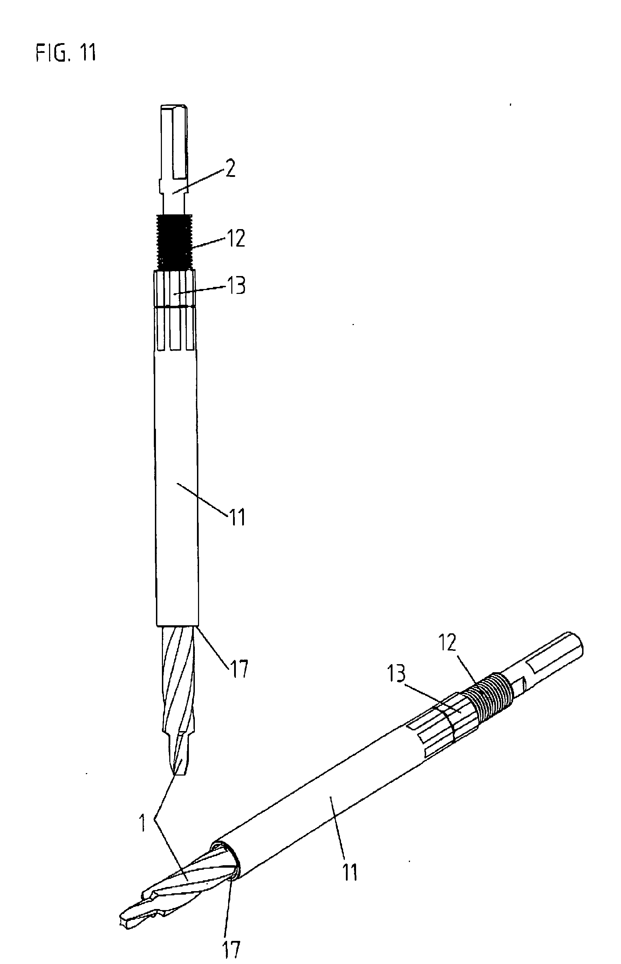

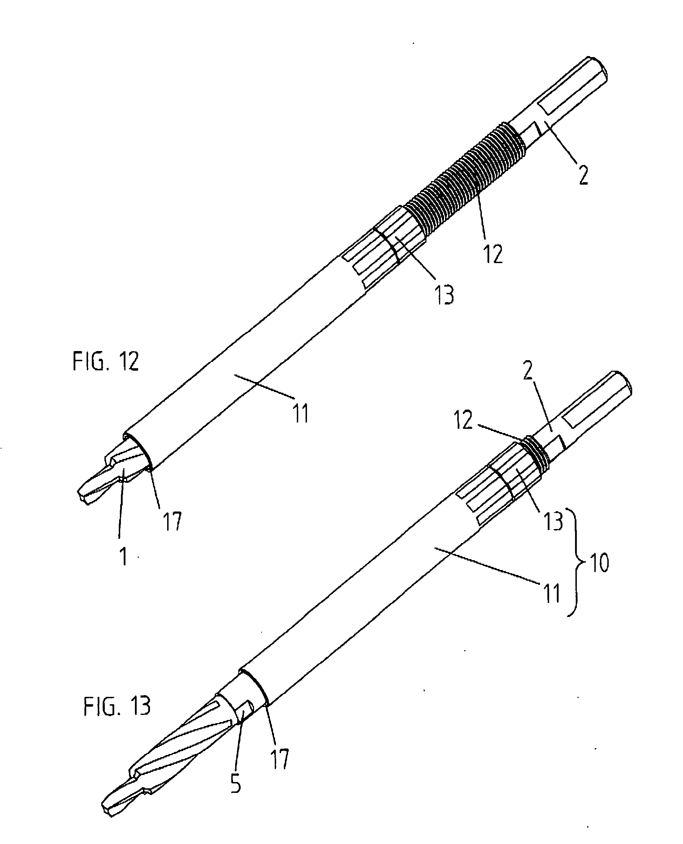

In Fig. 10 ist ein Set 6 zum Bohren eines Bohrlochs in einen Glühstift dargestellt. Dabei umfasst das Set 6, neben dem Bohrstift 1 und dem Bohrhalter 2, auch eine Bohrtiefeneinstellvorrichtung 10. Diese wiederum umfasst das Anschlagelement 11 sowie das Fixierelement 13. Diese beiden Komponenten weisen jeweils ein Innengewinde auf und sind über dieses Innengewinde mit dem am Bohrhalter 2 ausgebildeten Außengewinde verbindbar. Die jeweiligen Innengewinde bilden zusammen mit dem Außengewinde die Verbindungsvorrichtung 12. Am stirnseitigen Ende des in diesem Fall hülsenförmig ausgebildeten Anschlagelements 11 ist ein Anschlag 17 ausgebildet, mit dem das gesamte Set 6 in zusammengebautem Zustand auf einem Zylinderkopf führbar, abstützbar bzw. ansetzbar ist. Dieser zusammengebaute Zustand ist in Fig. 11 ersichtlich. Das Fixierelement 13 in Form einer Kontermutter dient dazu, die zuvor über das Anschlagelement 11 eingestellte genaue Lage des Anschlages 17 relativ zum Bohrstift 1 zu fixieren. In den Fig. 12 und 13 sind dazu weitere unterschiedliche Bohrtiefen ersichtlich. Der Vorteil dieser Bohrtiefeneinstellvorrichtung 10 liegt in der variablen bzw. kontinuierlichen Bohrtiefeneinstellung. Diese verbesserte Bohrtiefeneinstellung wird vor allem durch die erfindungsgemäße Ausbildung des Befestigungsbereichs B bzw. Haltebereichs H ermöglicht, durch die der Bohrhalter 2 wesentlich schmäler ausgebildet sein kann. Dadurch kann für die Bohrtiefeneinstellung zusätzlich diese verbesserte und variabel einsetzbare Bohrtiefeneinstellvorrichtung 10 verwendet werden.

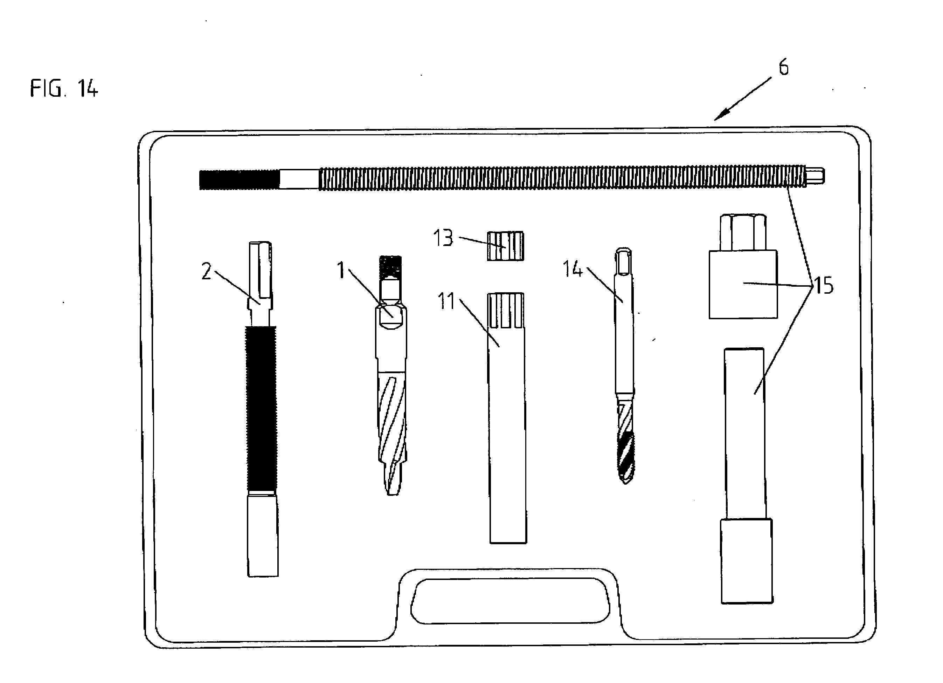

In Fig. 14 ist ein Koffer mit einem Set 6 zum Demontieren eines Glühstifts aus einem Zylinderkopf einer Brennkraftmaschine dargestellt. Dabei umfasst dieses Set 6 zumindest einen erfindungsgemäßen Bohrstift 1 und einen erfindungsgemäßen Bohrhalter 2. Zusätzlich kann dieses Set 6 auch eine Bohrtiefeneinstellvorrichtung 10 (Anschlagelement 11 und Fixierelement 13) und auch einen Gewindebohrer 14 (Innengewindeschneider) aufweisen. Ebenfalls zu diesem Set 6 kann auch eine Ausziehvorrichtung 15 gehören. Gegebenenfalls können aber die einzelnen Komponenten auch als separate Einheiten verkauft werden.

## Patentansprüche

1. Axial längserstreckter Bohrstift (1) mit einem stufenförmig ausgebildeten Bohrbereich (D) und einem axial betrachtet hinter dem Bohrbereich (D) angeordneten Befestigungsbereich (B) zur Befestigung des Bohrstiftes (1) in einem Bohrhalter (2), **dadurch gekennzeichnet, dass** der Befestigungsbereich (B) ein Gewinde (3) oder eine im Querschnitt polygonale Umfangsausbildung (4) aufweist, wobei das Gewinde (3) oder die polygonale Umfangsausbildung (4) im montierten Zustand des Bohrstiftes (1) am Bohrhalter (2) zur Drehmomentübertragung mit einem am Bohrhalter (2) komplementär ausgebildeten Bereich (H) zusammenwirkt.

2. Bohrstift nach Anspruch 1, **dadurch gekennzeichnet, dass** zumindest eine zur Längserstreckung des Bohrstiftes (1) parallele Flachstelle (5) zum Ansetzen eines Werkzeugs und zum Lösen des Bohrstiftes (1) vorgesehen ist.

3. Bohrstift nach Anspruch 2, **dadurch gekennzeichnet, dass** der Bohrstift (1) zwischen dem Befestigungsbereich (B) und dem Bohrbereich (D) zumindest abschnittsweise einen zylinderförmigen Bereich (Z) aufweist, wobei die Flachstelle im zylinderförmigen Bereich (Z) ausgebildet ist.

4. Axial längs erstreckter Bohrhalter (2) zum Halten eines Bohrstiftes (1), insbesondere nach einem der Ansprüche 1 bis 3, mit einem Haltebereich (H) zum Halten eines Bohrstiftes (1), **dadurch gekennzeichnet, dass** der Haltebereich (H) ein Gewinde (3') oder eine im Querschnitt polygonale Umfangsausbildung (4') aufweist, wobei das Gewinde (3') oder die polygonale Umfangsausbildung (4') im montierten Zustand des Bohrstiftes (1) am Bohrhalter (2) zur Drehmomentübertragung mit einem am Bohrstift (1) komplementär ausgebildeten Bereich (B) zusammenwirkt.

5. Bohrhalter nach Anspruch 4, **gekennzeichnet durch** einen axial betrachtet hinter dem Haltebereich (H) angeordneten Fixierbereich (F) zum Fixieren des Bohrhalters (2) an einem Bohrgerät.

6. Set (6) mit einem Bohrstift (1) nach einem der Ansprüche 1 bis 3 und einem Bohrhalter (2) nach Anspruch 4 oder 5.

7. Set nach Anspruch 6, **dadurch gekennzeichnet, dass** der Befestigungsbereich (B) und der Haltebereich (H) jeweils zumindest eine zueinander komplementär ausgebildete Keilfläche (7, 7') aufweist.

8. Set nach Anspruch 7, **dadurch gekennzeichnet, dass** der Befestigungsbereich (B) pyramidenstumpfförmig mit zumindest drei geneigten Pyramidenseitenflächen (8) ausgebildet ist, wobei jede Pyramidenseitenfläche (8) eine Keilfläche (7) bildet, und der Haltebereich (H) komplementär pyramidenstumpfförmig mit zumindest drei Pyramidenseitengegenflächen (9) ausgebildet ist, wobei jede Pyramidenseitengegenfläche (9) eine Keitfläche (7') bildet.

9. Set nach einem der Ansprüche 6 bis 8, **dadurch gekennzeichnet, dass** die polygonale Umfangsausbildung (4, 4') des Bohrstiftes (1) und des Bohrhalters (2) quadratisch ausgebildet ist.

10. Set nach Anspruch 6, **dadurch gekennzeichnet, dass** das Gewinde (3) des Bohrstiftes (1) als Außengewinde und das Gewinde (3') des Bohrhalters (2) als komplementäres Innengewinde ausgebildet ist.

11. Set nach einem der Ansprüche 6 bis 10, **gekennzeichnet durch** eine Bohrtiefeneinstellvorrichtung (10), mit der die Bohrtiefe des Bohrstiftes (1) variabel einstellbar ist.

12. Set nach Anspruch 11, **dadurch gekennzeichnet, dass** die Bohrtiefeneinstellvorrichtung (10) aufweist:
- ein, vorzugsweise hülsenförmiges, Anschlagelement (11) zum Ansetzen und gegebenenfalls zum Führen an einem Zylinderkopf, wobei das Anschlagelement (11) über eine Verbindungsvorrichtung (12), vorzugsweise ein Gewinde, mit dem Bohrhalter (2) verbindbar ist, und
- ein mit dem Bohrhalter (2) verbindbares Fixierelement (13), vorzugsweise eine Kontermutter,
wobei die Position des Anschlagelements (11) relativ zum Bohrhalter (2) durch das Fixierelement (13) variabel festlegbar ist.

13. Set nach einem der Ansprüche 6 bis 12, **gekennzeichnet durch** einen Gewindebohrer (14) zum Schneiden eines Innengewindes in einen Glühstift.

14. Set nach einem der Ansprüche 6 bis 13, **gekennzeichnet durch** eine Demontagevorrichtung (15) zum Demontieren eines Glühstifts aus einem Zylinderkopf einer Brennkraftmaschine.

15. Verwendung eines Bohrstiftes (1) nach einem der Ansprüche 1 bis 3 zum Bohren einer Ausnehmung in einen, in einem Zylinderkopf einer Brennkraftmaschine festsitzenden Glühstift.
